# FASCICULE DE BREVET EUROPEEN

(11) **EP 3 588 274 B1**
(45) Date de publication et mention de la délivrance du brevet: **03.04.2024**
(21) Numéro de dépôt: 19181077.9
(22) Date de dépôt: 18.06.2019
(51) Int. Cl.: G06F 8/41, G06F 8/51, G06F 9/54, G06F 16/245, G06F 16/2452, G06F 16/242, G06F 8/30

(54) **PRE-COMPILATION POUR REQUÊTE SQL EMBARQUÉE DANS DU CODE SOURCE COBOL**
VORKOMPILIERUNG FÜR EINGEBETTETES SQL IN COBOL QUELLCODE
PRE COMPILATION FOR EMBEDDED SQL IN COBOL SOURCE CODE

(30) Priorité: 26.06.2018 FR 1855695
(43) Date de publication de la demande: 01.01.2020
(73) Titulaire: BULL SAS, 78340 Les Clayes-sous-Bois (FR)
(72) Inventeur: AVAKIANTZ, Daniel, 78530 Buc (FR)
(74) Mandataire: Camus, Olivier Jean-Claude

(56) Documents cités:
- US-A1- 2001 011 371
- US-A1- 2003 041 052
- Darius Blasband: "Compilation of Legacy Languages in the 21st Century" In: "Serious Games", 1 janvier 2013 (2013-01-01), Springer International Publishing, Cham 032682, XP055573349, ISSN: 0302-9743 ISBN: 978-3-642-38979-5 vol. 7680, pages 1-54, DOI: 10.1007/978-3-642-35992-7_1, * abrégé * * alinéas [1.4.2] - [0005] *
- Faye Baron: "Week 5: Embedded SQL - Update Statements", Slides of Winter semester 2008 Courses of the University of Toronto - Week 5 - CSC343 - Introduction to Databases - Embedded SQL, 1 janvier 2008 (2008-01-01), pages 1-16, XP055568736, University of Toronto Extrait de l'Internet: URL:http://www.cs.toronto.edu/~faye/343/w0 8/lectures/wk5/05EmbeddedSQLv2-4up.pdf [extrait le 2019-03-13]
- ZHANG YI ET AL: "JDBC-based middleware applications in instant message systems", THE 2014 2ND INTERNATIONAL CONFERENCE ON SYSTEMS AND INFORMATICS (ICSAI 2014), IEEE, 15 novembre 2014 (2014-11-15), pages 1044-1049, XP032722279, DOI: 10.1109/ICSAI.2014.7009439
- Jean-Luc Hainaut ET AL: "Dynamic Analysis of SQL Statements in Data-intensive Programs", , 14 mars 2008 (2008-03-14), XP055573365, Extrait de l'Internet: URL:http://citeseerx.ist.psu.edu/viewdoc/d ownload;jsessionid=074E005AB40B6777838075D 97A8E8D74?doi=10.1.1.148.9688&rep=rep1&typ e=pdf
- Watt Simon ET AL: "Pro*COBOL - Programmer's Guide 11g Release 2 (11.2) E10826-01", Oracle - Programmer's Guide, 1 July 2009 (2009-07-01), pages 1-145, XP055910683, Retrieved from the Internet: URL:http://luna-ext.di.fc.ul.pt/oracle11g/ appdev.112/e10826.pdf [retrieved on 2022-04-07]

## Description

La présente invention concerne un pré-compilateur, un système de développement d'un programme, un procédé de pré-compilation et un programme d'ordinateur correspondant.

L'invention s'applique plus particulièrement à un pré-compilateur du type conçu pour :
- analyser un code source comportant du code principal écrit dans un langage informatique principal et au moins un bloc de code écrit dans un autre langage informatique embarqué dans le code principal, et
- remplacer chaque bloc de code embarqué par du code de remplacement dans le langage informatique principal.

Par exemple, la société MICROFOCUS commercialise une suite logicielle comportant un pré-compilateur (également appelé « pré-processeur ») appelé OpenESQL du type précité, dans lequel le langage informatique principal est le langage COBOL et chaque bloc de code embarqué est une instruction SQL embarquée, de laquelle une instruction SQL à destination d'une base de données est destinée à être déduite.

Le document intitulé « Pro*COBOL - Programmer's Guide 11g Release 2 (11.2) E10826-01 », rédigé par Watt SIMON et publié par Oracle en juillet 2009, [ extrait de l'Internet le 07 avril 2022, URL: http://luna-ext.di.fc.ul.pt/ oracle11g/appdev.112/e10826.pdf ], est un guide de programmation concernant le précompilateur "ProCOBOL", qui est capable de précompiler du code source COBOL comprenant des instructions SQL embarquées utilisant des variables de caractères à longueur variable. Toutefois, ce compilateur n'est apte à remplacer des expressions de forme prédéfinie dans des instructions SQL embarquées par du code COBOL générique, ces expressions concernant l'utilisation de variables de caractères à longueur variable au sein des instructions SQL embarquées.

Or, les bases de données Oracle supportent les variables d'indicateur (de l'anglais « indicator variables »). Une variable d'indicateur est une variable ajoutée à la suite d'une variable principale, après le signe « : », et indiquant le nombre de premiers caractères de la variable principale qui sont utilisés. Ainsi, si la variable principale peut contenir 32 caractères mais que seuls les 10 premiers sont utilisés (les autres étant par exemple des espaces), la variable d'indicateur aura la valeur 10. Cela permet à la base de données de n'utiliser qu'une variable de longueur 10 pour stocker la variable principale.

Il peut être souhaité de prévoir un pré-compilateur qui permette d'utiliser les variables d'indicateur pour n'importe quel type de base de données.

L'invention a donc pour objet un pré-compilateur du type précité, caractérisé en ce qu'il est en outre conçu pour :
- analyser un code source, dit code principal, écrit en langage COBOL ) et comportant :
   ∘ une définition d'une première variable, dite principale, définie dans le code principal pour contenir une chaîne de caractères, et
   ∘ une définition d'une deuxième variable, dite d'indicateur, définie dans le code principal contenant un nombre entier N indiquant le nombre de premiers caractères contenus dans la variable principale qui lui est associée à utiliser par la base de données;
   - au moins une instruction SQL embarquée, destinée à une base de données SQL et susceptible de comporter une expression de forme prédéfinie comportant :
      ▪ la variable principale définie dans le code principal ;
      ▪ la variable d'indicateur relatif à la variable principale définie dans le code principal ; et
      ▪ un ou plusieurs caractères prédéfinis d'association de chaque variable principale et à chaque variable d'indicateur qui lui est associé;

   une ou plusieurs expressions de forme prédéfinie dans la ou les instructions SQL embarquées étant recherchées lors de cette analyse;
   caractérisé en ce qu'il est en outre conçu pour :
      - remplacer chaque expression de forme prédéfinie dans le ou les instructions SQL embarquées trouvées lors de l'analyse précédente par du code de remplacement dans le langage COBOL fournissant les N premiers caractères de la variable principale lorsqu'il est compilé par un compilateur et exécuté par un ordinateur,
      - remplacer (214) chaque expression SQL embarqué trouvée par du code de remplacement en COBOL.

Grâce à l'invention, l'expression de variable d'indicateur est remplacée par du code dans le langage principale permettant l'utilisation de la variable d'indicateur par n'importe quelle base de données. Ainsi, ce sont les N premiers caractères contenus dans la variable principale qui sont envoyés à la base de données, à la place de l'expression de forme prédéfinie comportant la variable d'indicateur, de sorte que n'importe quelle base de données peut comprendre ce qui est envoyé. Dit autrement, l'interprétation de l'expression de forme prédéfinie et le traitement de la chaîne de caractères de la variable principale qui découle de cette interprétation, qui étaient auparavant réalisés dans la base de données, sont, dans l'invention, réalisés par le programme d'ordinateur qui envoie le résultat, de sorte que la base de données n'a pas besoin d'être conçue pour réaliser cette interprétation et ce traitement.

De façon optionnelle chaque expression recherchée est de la forme A:B, où A est la variable principale et B la variable d'indicateur.

De façon optionnelle également, le code fournissant les N premiers caractères de la variable principale est de la forme A(1:B), où A est la variable principale et B est la variable d'indicateur.

De façon optionnelle également, le pré-compilateur est en outre conçu pour, avant la recherche dans le ou les blocs de code embarqué de l'expression :
- rechercher, dans le ou les blocs de code embarqué, une variable définie dans le code dans le langage informatique comme étant de longueur variable,
- remplacer chaque variable de longueur variable trouvée par une expression de variable d'indicateur comportant :
   - une variable principale destinée à contenir une chaîne de caractères,
   - une variable d'indicateur destinée à contenir un nombre entier, et
   - le ou les caractères prédéfinis d'association des variables principale et d'indicateur.

De façon optionnelle également, le pré-compilateur est conçu pour détecter la présence d'un mot-clé prédéfini dans une définition d'une variable pour déterminer que cette variable est de longueur variable.

Le langage informatique principal est le langage COBOL.

Chaque bloc de code embarqué est une instruction SQL embarquée.

L'invention a également pour objet un système de développement d'un programme destiné à communiquer avec un ensemble d'au moins une base de données chacune conçue pour recevoir des instructions SQL, comportant :
- une interface destinée à être connectée à chaque base de données de l'ensemble,
- une bibliothèque logicielle,
- un pré-compilateur selon l'invention,

dans lequel le code de remplacement comporte un appel à une routine de la bibliothèque logicielle passant à la routine une instruction issue du bloc de code embarqué, afin de fournir un code source pré-compilé,
dans lequel le code source pré-compilé est destiné à être compilé par un compilateur pour fournir un programme exécutable comportant le ou les appels à la routine,
dans lequel le programme exécutable et la routine appelée sont destinés à être exécutés par un dispositif informatique,
dans lequel la routine appelée est conçue pour envoyer à l'interface un message comportant l'instruction passée avec l'appel, et
dans lequel l'interface est conçue pour relayer, en tant qu'instruction SQL, l'instruction d'au moins un du ou des messages reçus à au moins une base de données de l'ensemble.

De façon optionnelle, l'interface est un serveur destiné à être connectée à un réseau informatique auquel le dispositif informatique est connecté et dont la routine est un client.

De façon optionnelle également, l'interface est conçue pour :
- tenir une liste de la ou des bases données de l'ensemble à chacune desquelles l'interface a relayé une instruction d'un du ou des messages reçus de la part de la routine, demandant un accès à cette base de données,
- analyser chaque message reçu de la routine pour déterminer si l'instruction de ce message est une instruction prédéfinie, et
- si l'instruction de ce message est l'instruction prédéfinie, mettre en oeuvre une procédure de consignation de la ou des bases de données de la liste.

De façon optionnelle également, l'interface est conçue pour :
- analyser chaque message reçu de la part de la routine et déterminer si ce message comporte, en plus de l'instruction, un nombre représentant un nombre maximal de résultats,
- relayer, en tant qu'instruction SQL, l'instruction du message reçu à une base de données de l'ensemble,
- recevoir de la part de cette base de données une réponse à l'instruction SQL comportant des résultats,
- filtrer les résultats pour ne garder que le nombre maximal de résultats, et
- envoyer à la routine, à la place de la réponse reçue, une réponse de remplacement comportant uniquement les résultats filtrés.

L'invention a également pour objet un procédé de pré-compilation comportant :
- l'analyse d'un code source, dit code principal, écrit en langage COBOL et comportant :
   ∘ une définition d'une première variable, dite principale, définie dans le code principal pour contenir une chaîne de caractères, et
   ∘ une définition d'une deuxième variable, dite d'indicateur, définie dans le code principal contenant un nombre entier N indiquant le nombre de premiers caractères contenus dans la variable principale qui lui est associée à utiliser par la base de données, et
   ∘ au moins une instruction SQL embarquée dans le code principal, destinée à une base de données, susceptible de comporter une expression de forme prédéfinie comportant :
      ▪ la variable principale définie dans le code principal;
      ▪ la variable d'indicateur relatif à la variable principale définie dans le code principal; et
      ▪ un ou plusieurs caractères prédéfinis d'association de chaque variable principale et à chaque variable d'indicateur qui lui est associé;
caractérisé en ce qu'il comporte en outre :
- le remplacement de chaque expression de forme prédéfinie dans les instructions SQL embarquée trouvée lors de l'analyse précédente par du code de remplacement dans le langage COBOL fournissant les N premiers caractères de la variable principale informatique principal conçu, lorsqu'il est compilé par un compilateur et exécuté par un ordinateur;
- le remplacement de chaque expression SQL embarqué trouvée par du code de remplacement en COBOL.

L'invention a également pour objet un programme d'ordinateur téléchargeable depuis un réseau de communication et/ou enregistré sur un support lisible par ordinateur et/ou exécutable par un processeur, caractérisé en ce qu'il comprend des instructions pour l'exécution des étapes d'un procédé de pré-compilation selon l'invention, lorsque ledit programme est exécuté sur un ordinateur.

L'invention sera mieux comprise à l'aide de la description qui va suivre, donnée uniquement à titre d'exemple et faite en se référant aux dessins annexés dans lesquels :
- la figure 1 représente schématiquement la structure générale d'une installation informatique, selon un mode de réalisation de l'invention, et
- la figure 2 illustre les étapes successives d'un procédé de développement et d'utilisation d'un programme destiné à communiquer avec un ensemble de bases de données, selon un mode de réalisation de l'invention.

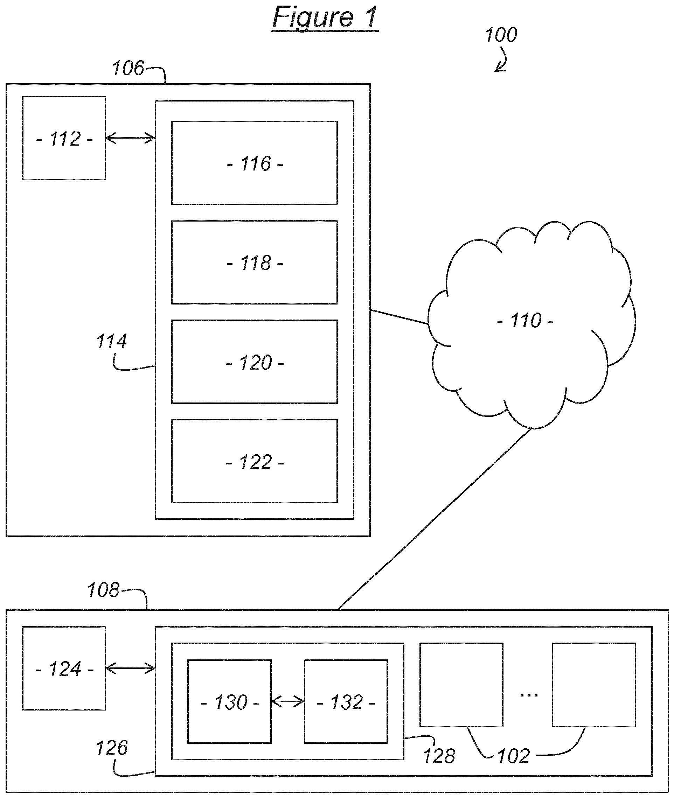

En référence à la figure 1, une installation informatique 100 mettant en oeuvre l'invention va à présent être décrite.

L'installation informatique 100 comporte un ensemble d'au moins une base de données, désignée(s) individuellement et collectivement par la référence 102, et un système de communication avec la ou les bases de données 102.

Dans la présente description, le terme « base de données » regroupe non seulement la structure informatique contenant les données, mais également le système de gestion de base de données permettant de manipuler cette structure.

Chaque base de données 102 est conçue pour recevoir des instructions SQL (de l'anglais « Structured Query Langage »). Chaque base de données est par exemple de l'un des types suivants : PostgreSQL, Oracle, MySQL, SQL Server, DB2.

Le système de communication avec la ou les bases de données 102 comporte des premier et deuxième dispositifs informatiques 106, 108, ainsi qu'un réseau informatique 110 auquel les premier et deuxième dispositifs informatiques 106, 108 sont connectés, pour leur permettre d'échanger des données. Le réseau informatique 110 est par exemple un réseau TCP/IP. En particulier, les premier et deuxième dispositifs informatiques 106, 108 présentent des adresses respectives dans ce réseau informatique 110.

Le premier dispositif informatique 106 comporte une unité centrale de traitement 112, telle qu'un microprocesseur, et une mémoire 114 dans laquelle sont enregistrés un code source 116, une bibliothèque logicielle 118 comportant au moins une routine, dite de communication, un pré-compilateur 120 (également appelé « préprocesseur ») et un compilateur 122.

Le code source 116 comporte du code en langage COBOL et au moins une instruction SQL embarquée (de l'anglais « Embedded SQL »). Chaque instruction SQL embarquée est destinée à générer une instruction SQL transmise à au moins une base de données 102 de l'ensemble. Dans le cas le plus simple, l'instruction SQL est identique à l'instruction SQL embarquée.

Le pré-compilateur 120 est par exemple écrit en langage C et peut être utilisé sur tout dispositif informatique comportant un compilateur COBOL.

Dans l'exemple décrit, le premier dispositif informatique 106 est un ordinateur central (« mainframe » en anglais) utilisant un système d'exploitation de la famille GCOS (de l'anglais « General Comprehensive Operating System »), par exemple le système d'exploitation GCOS 7.

Le deuxième dispositif informatique 108 comporte une unité centrale de traitement 124, telle qu'un microprocesseur, et une mémoire 126 dans laquelle sont enregistrés une machine virtuelle 128 (une machine virtuelle Java dans l'exemple décrit), une interface 130 destinée à être exécutée dans la machine virtuelle 128, et une bibliothèque logicielle 132 également destinée à être exécutée dans la machine virtuelle 128, sur appel de l'interface 130. L'interface 130 est ainsi écrite en langage Java et utilise la bibliothèque logicielle 132 (dans l'exemple décrit, la bibliothèque JDBC de l'anglais « Java Database Connectivity ») pour se connecter et communiquer avec chaque base de données 102 de l'ensemble. L'interface 130 est un serveur dont la routine de communication est un client. L'interface peut ainsi être utilisée par plusieurs clients. Elle est donc réutilisable par chaque un programme en langage COBOL développé à l'aide du pré-compilateur 120.

Cela simplifie le développement des programmes d'ordinateur puisque les développeurs n'ont pas besoin d'avoir l'interface lors du développement du programme d'ordinateur, mais simplement de la bibliothèque comportant la routine de l'invention. En outre, s'il y a besoin de modifier l'interface (par exemple pour supporter de nouveaux types de bases de données), cela se fait de manière transparente pour les programmes d'ordinateur qui continuent à utiliser la routine communiquant selon le mode client-serveur avec l'interface modifiée.

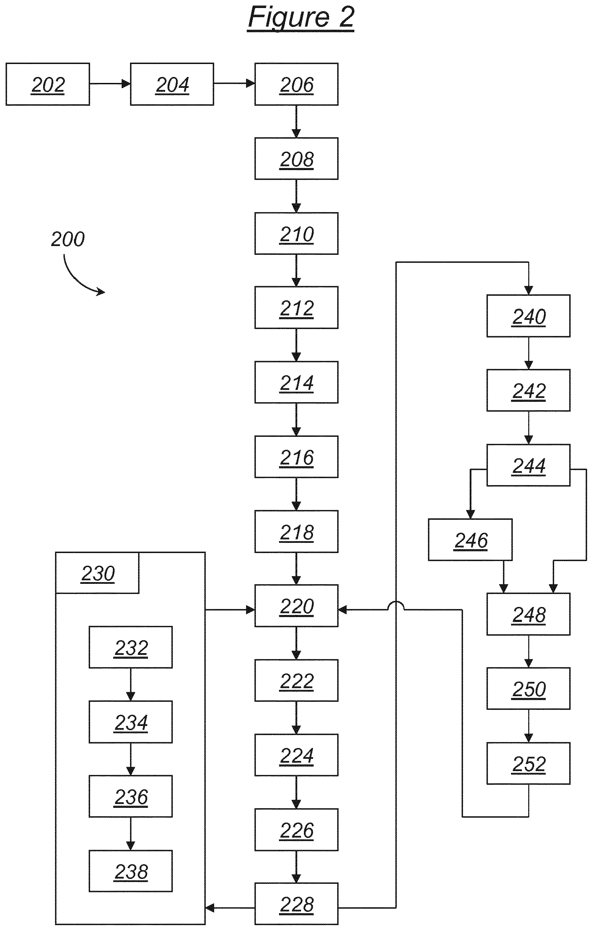

En référence à la figure 2, un procédé 200 de développement et d'utilisation d'un programme destiné à communiquer avec l'ensemble de base(s) de données 102 va à présent être décrit.

Au cours d'une étape 202, le pré-compilateur 120 obtient le code source 116 comportant la ou les instructions SQL embarquées. Chaque instruction SQL embarquée est par exemple repérée dans le code source 116 grâce à au moins une expression prédéfinie. Par exemple, chaque instruction SQL embarquée est placée entre une expression prédéfinie de début (« EXEC SQL » dans l'exemple décrit) et une expression prédéfinie de fin (« END-EXEC » dans l'exemple décrit).

Dans un premier exemple, le code en langage COBOL du code source 116 comporte la définition de deux variables NAME et ADDRESS (appartenant dans l'exemple décrit à une structure appelée SHOP) :
01 SHOP.

| | |
|---|---|
| 02 NAME | PIC X(32) VARYING |
| 02 ADDRESS | PIC X(40) VARYING |

En outre, le code source 116 comporte en outre l'instruction SQL embarquée :
EXEC SQL
   UPDATE _SHOPS_ SET _ADDRESS_ = :ADDRESS
   WHERE _NAME_ = :NAME
END-EXEC.
   utilisant les deux variables NAME et ADDRESS.

Dans ce premier exemple, les variables NAME et ADDRESS sont définies comme étant de longueur variable du fait de la présence d'un mot-clé prédéfini (« VARYING ») à la fin de la définition.

Dans un deuxième exemple, le code source 116 comporte l'instruction SQL embarquée suivante :
EXEC SQL
   AT MYDB ALTER TABLE SHOPS ADD SHOP_NAME CHAR(10)
END-EXEC.

Cette instruction SQL embarquée demande d'ajouter une colonne SHOP_NAME, dont les éléments peuvent comporter jusqu'à dix caractères, à la table SHOPS de la base de données MYDB.

Dans un troisième exemple, le code source 116 comporte l'instruction SQL embarquée suivante :
EXEC SQL
   FOR :NB-ROW AT MYDB SELECT SHOP_NAME, SHOP_TOWN INTO :SHOP-NAME-T, :SHOP-TOWN-T FROM SHOPS
END-EXEC.

Cette instruction SQL embarquée demande de sélectionner les éléments les colonnes SHOP_NAME et SHOP_TOWN de la table SHOPS de la base de données MYDB, en limitant les résultats au nombre NB-ROW et en enregistrant la réponse dans les variables SHOP-NAME-T et SHOP-TOWN-T. Les variables NB-ROW, SHOP-NAME-T et SHOP-TOWN-T sont des variables définies dans la partie en langage COBOL du code source 116, en dehors de l'instruction SQL embarquée, comme indiqué par les deux points « : » qui les précèdent.

Dans un quatrième exemple, le code source 116 comporte l'instruction SQL embarquée suivante :
EXEC SQL
   COMMIT ALL
END-EXEC

Comme cela sera expliqué par la suite, cette quatrième instruction SQL embarquée vise à réaliser une consignation d'au moins une base de données 102 de l'ensemble.

Au cours d'une étape 204, le pré-compilateur 120 analyse le code source 116 pour rechercher une instruction SQL embarquée. Dans l'exemple décrit, le pré-compilateur 120 recherche la paire d'expressions prédéfinies de début et de fin et en déduit que le code placé entre elles est une instruction SQL embarquée.

Au cours d'une étape 206, le pré-compilateur 120 recherche une définition d'une variable de longueur variable utilisée dans au moins une instruction SQL embarquée trouvée. Dans l'exemple décrit, le pré-compilateur 120 détecte la présence du mot clé prédéfini (« VARYING ») dans la définition d'une variable pour déterminer que cette variable est de longueur variable.

Dans le premier exemple précédent, le pré-compilateur 120 trouve donc la définition de la variable NAME et la définition de la variable ADDRESS.

Au cours d'une étape 208, le pré-compilateur 120 remplace, dans le code en langage COBOL, chaque définition de chaque variable de longueur variable trouvée par deux définitions de respectivement deux variables : une première variable dite principale destinée à contenir une chaîne de caractères et une deuxième variable dite d'indicateur destinée à contenir un nombre entier représentant la longueur utilisée de la variable principale. Par exemple si la variable principale est une chaîne de caractère de 32 caractères et qu'elle contient un mot de 10 caractères suivi de 22 espaces, la variable d'indicateur contiendra le nombre 10.

Ainsi, dans le premier exemple précédent, les définitions des variables NAME et ADDRESS dans le code en langage COBOL sont remplacées par les définitions suivantes :
01 SHOP.
02 NAME.

| | |
|---|---|
| 49 NAME-LEN | COMP-2. |
| 49 NAME-ARR | PIC X(32) |

02 ADDRESS.

| | |
|---|---|
| 49 ADDRESS-LEN | COMP-2. |
| 49 ADDRESS-ARR | PIC X(40) |

Toujours au cours de l'étape 208, le pré-compilateur 120 remplace en outre, dans chaque instruction SQL embarquée l'utilisant, chaque variable de longueur variable trouvée par une expression de variable d'indicateur comportant les variables principale et d'indicateur associées et un ou plusieurs caractères prédéfinis d'association des variables principale et d'indicateur. L'expression de variable d'indicateur est par exemple de la forme A:B, où A est la variable principale et B la variable d'indicateur.

Ainsi, dans le premier exemple précédent, les variables NAME et ADDRESS sont remplacées respectivement par NAME-ARR:NAME-LEN et ADDRESS-ARR:ADDRESS-LEN, de sorte que l'instruction SQL embarquée devient :
EXEC SQL
   UPDATE _SHOPS_ SET _ADDRESS_ = :ADDRESS-ARR:ADDRESS-LEN
   WHERE _NAME_ = :NAME-ARR:NAME-LEN
END-EXEC.

Au cours d'une étape 210, le pré-compilateur 120 analyse à nouveau le code source 116 tel que modifié à l'étape 208 pour rechercher une expression de variable d'indicateur dans la ou des instructions SQL embarquées.

Au cours d'une étape 212, le pré-compilateur 120 remplace chaque expression de variable d'indicateur trouvée par une expression de remplacement en langage COBOL fournissant les N premiers caractères de la variable principale, N étant la valeur de la variable d'indicateur. Dans l'exemple décrit, l'expression de remplacement est A(1 :B) où A est la variable principale et B la variable d'indicateur.

Ainsi, dans le premier exemple précédent, l'expression ADDRESS-ARR:ADDRESS-LEN est remplacée par l'expression ADDRESS-ARR(1:ADDRESS-LEN) et l'expression NAME-ARR:NAME-LEN est remplacée par l'expression NAME-ARR(1:NAME-LEN), de sorte que l'instruction SQL embarquée devient :
EXEC SQL
   UPDATE _SHOPS_ SET _ADDRESS_ = :ADDRESS-ARR(1:ADDRESS-LEN)
   WHERE _NAME_ = :NAME-ARR(1:NAME-LEN)
END-EXEC.

Ainsi, le pré-compilateur 120 autorise le développeur écrivant le code source 116 à utiliser, au choix, soit directement des expressions de variables d'indicateur dans les instructions SQL embarquées (traitées dans les étapes 210 et 212), soit, dans les instructions SQL embarquées, des variables de longueur variable (traitées aux étapes 206 et 208, puis aux étapes 210 et 212). Ainsi, le pré-compilateur 120 offre une souplesse de conception au développeur.

Au cours d'une étape 214, le pré-compilateur 120 remplace chaque instruction SQL embarquée trouvée (ainsi que les expressions prédéfinies de début et de fin l'entourant) par du code de remplacement en langage COBOL.

Le code de remplacement comporte tout d'abord une première partie définissant une structure de données, nommée SQL-IO-PARAMETERS dans l'exemple décrit. La structure de données SQL-IO-PARAMETERS comporte une première variable, nommée SQL-REQUEST dans l'exemple décrit, de type chaîne de caractères et destinée à contenir une instruction issue de l'instruction SQL embarquée. La structure de données SQL-IO-PARAMETERS comporte en outre une deuxième variable, nommée SQL-FOR-VALUE dans l'exemple décrit, destinée à contenir un argument d'une clause FOR de l'instruction SQL embarquée. La structure de données SQL-IO-PARAMETERS comporte en outre une troisième variable, nommée SQL-AT-VALUE dans l'exemple décrit, destinée à contenir un argument d'une clause AT de l'instruction SQL embarquée.

Le code de remplacement comporte en outre une deuxième partie destinée à déduire une instruction depuis l'instruction SQL embarquée et à enregistrer cette instruction déduite dans la variable SQL-REQUEST. Dans l'exemple décrit, l'instruction déduite correspond à l'instruction SQL embarquée sans les clauses FOR, AT et INTO. Il sera apprécié que, dans l'exemple décrit, si l'instruction SQL embarquée ne comporte pas de clause FOR, AT ou INTO, l'instruction déduite est identique à l'instruction SQL embarquée.

Dans le premier exemple précédent, la deuxième partie du code de remplacement est :
STRING
   "UPDATE _SHOPS SET _ADDRESS="
   ADDRESS-ARR(1:ADDRESS-LEN)
   " WHERE _NAME="
   NAME-ARR(1:NAME-LEN)
   DELIMITED BY SIZE INTO SQL-REQUEST
END-STRING,
   Ainsi, l'instruction SQL : UPDATE _SHOPS SET _ADDRESS=ADDRESS-ARR(1:ADDRESS-LEN) WHERE _NAME= NAME-ARR(1:NAME-LEN) est enregistrée dans la variable SQL-REQUEST.

Dans le deuxième exemple précédent, la deuxième partie du code de remplacement est :
STRING
   "ALTER TABLE SHOPS ADD SHOP_NAME CHAR(10)"
   DELIMITED BY SiZE INTO SQL-REQUEST
END-STRING,
   Ainsi, l'instruction SQL : ALTER TABLE SHOPS ADD SHOP_NAME CHAR(10) est enregistrée dans la variable SQL-REQUEST.

Dans le troisième exemple précédent, la deuxième partie du code de remplacement est :
STRING
   "SELECT SHOP_NAME, SHOP_TOWN "
   "FROM SHOPS"
   DELIMITED BY SiZE INTO SQL-REQUEST
END-STRING,
   Ainsi, l'instruction SQL : SELECT SHOP_NAME, SHOP_TOWN FROM SHOPS est enregistrée dans la variable SQL-REQUEST.

Dans le quatrième exemple précédent, la deuxième partie du code de remplacement est :
STRING
   "COMMIT ALL"
   DELIMITED BY SiZE INTO SQL-REQUEST
END-STRING,
   Ainsi, l'instruction SQL : COMMIT ALL est enregistrée dans la variable SQL-REQUEST.

Le code de remplacement comporte en outre une troisième partie destinée à enregistrer les arguments des clauses FOR et AT dans les variables respectives SQL-FOR-VALUE et SQL-AT-VALUE.

Dans les premier et quatrième exemples précédents, la troisième partie du code de remplacement est vide puisqu'il n'y a pas de clause FOR ni de clause AT.

Dans le deuxième exemple précédent, la troisième partie du code de remplacement est :
MOVE "MYDB" TO SQL-AT-VALUE,
Dans le troisième exemple précédent, la troisième partie du code de remplacement est :
MOVE NB-ROW TO SQL-FOR-VALUE,
MOVE "MYDB" TO SQL-AT-VALUE,
Le code de remplacement comporte en outre une quatrième partie comportant un appel à la routine de communication de la bibliothèque logicielle 118 passant la variable SQL-REQUEST dans laquelle est enregistrée l'instruction extraite et les variables SQL-FOR-VALUE et SQL-AT-VALUE dans lesquelles sont enregistrés, le cas échéant, les arguments des clauses FOR et AT.

Dans l'exemple décrit, la structure SQL-IO-PARAMETERS est passée à l'appel de la routine de communication pour passer les variables SQL-REQUEST, SQL-FOR-VALUE et SQL-AT-VALUE.

Dans les quatre exemples précédents, la quatrième partie du code de remplacement est la suivante (la routine de communication ayant dans l'exemple décrit le nom SQL-CALL) :
CALL "SQL-CALL" USING SQL-IO-PARAMETERS,
Si une clause INTO est présente dans l'instruction SQL embarquée, le code de remplacement comporte en outre une cinquième partie destinée à enregistrer une réponse à l'instruction SQL embarquée dans les variables indiquées par la clause INTO.

Ainsi, dans les premier, deuxième et quatrième exemples précédents, il n'y a aucune clause INTO, de sorte que le code de remplacement ne comporte pas la cinquième partie.

Dans le troisième exemple précédent, la cinquième partie du code de remplacement est destinée à enregistrer les résultats pour la colonne SHOP_NAME dans la variable SHOP-NAME-T et les résultats pour la colonne SHOP_TOWN dans la variable SHOP-TOWN-T.

Au cours d'une étape 216, le pré-compilateur 120 fournit un code source pré-compilé, qui est entièrement en langage COBOL.

Au cours d'une étape 218, le compilateur 122 compile le code source pré-compilé pour fournir un programme exécutable composé de code machine. Ce programme exécutable comporte notamment le ou les appels vers la routine de communication de la bibliothèque logicielle 118 ayant remplacé le ou les instructions SQL embarquées.

Au cours d'une étape 220, le premier dispositif informatique 106 exécute le programme exécutable.

Au cours d'une étape 222, le premier dispositif informatique 106 atteint, dans le programme exécutable, du code machine issu de la compilation du code de remplacement d'une instruction SQL embarquée. Ainsi, en particulier, la routine de communication (quatrième partie du code de remplacement) est appelée et l'instruction déduite lui est passée ainsi que, le cas échéant, les arguments des clauses FOR et AT (contenus dans les variables SQL-FOR-VALUE et SQL-AT-VALUE).

Au cours d'une étape 224, la routine de communication envoie à l'interface 130, via le réseau informatique 110, un message comportant l'instruction déduite et, le cas échéant, les arguments des clauses FOR et AT. Ainsi, le message est envoyé à l'adresse de l'interface 130 dans le réseau informatique 110.

Au cours d'une étape 226, l'interface 130 reçoit le message envoyé par la routine de communication et l'analyse.

Au cours d'une étape 228, l'interface 130 détermine si l'instruction déduite contenue dans le message reçu est l'instruction prédéfinie : COMMIT ALL. Si c'est le cas, le procédé 200 passe à l'étape 230, sinon il passe à l'étape 240.

Au cours d'une étape 230, l'interface 130 intercepte l'instruction déduite contenue dans le message reçu et met en oeuvre une procédure de consignation de la ou des bases de données 102 appartenant à une liste maintenue à jour par l'interface 130 et listant la ou les bases de données auxquelles le programme exécutable a accédé. Une base de données 102 à laquelle le programme exécutable a accédé est une base de données 102 à laquelle l'interface 130 a transmis au moins une instruction SQL issue d'une instruction SQL embarquées ayant été remplacée dans le code source du programme exécutable. Dans l'exemple décrit, la procédure de consignation comporte les étapes 232 à 238.

Au cours d'une étape 232, l'interface 130 envoie, à chaque base de données 102 de la liste, une première instruction SQL de remplacement demandant de préparer une consignation. Dans l'exemple décrit, la première instruction SQL de remplacement est l'instruction SQL : PREPARE TO COMMIT.

Au cours d'une étape 234, chaque base de données 102 de la liste reçoit la première instruction SQL, se prépare à la consignation et envoie une réponse indiquant que cette base de données 102 est prête à mettre en oeuvre la consignation.

Au cours d'une étape 236, l'interface 130 reçoit, de chaque base de données 102 de la liste, la réponse indiquant que cette base de données 102 est prête à mettre en oeuvre la consignation.

Au cours d'une étape 238, suite à la réception des réponses de toutes les bases de données 102 de la liste, l'interface 130 envoie, à chaque base de données 102 de la liste, une deuxième instruction SQL de remplacement demandant de mettre en oeuvre la consignation. Dans l'exemple décrit, la deuxième instruction SQL de remplacement est l'instruction SQL : COMMIT. Le procédé 200 retourne alors à l'étape 220.

Au cours d'une étape 240, l'interface 130 détermine si le message reçu comporte, en plus de l'instruction déduite qu'il contient, une variable contenant un argument d'une clause FOR.

Au cours d'une étape 242, l'interface 130 relaie, en tant qu'instruction SQL, l'instruction déduite contenue dans le message reçu à la base de données 102 indiquée par l'argument de la clause AT.

Au cours d'une étape 244, cette base de données 102 reçoit l'instruction SQL, la traite et, le cas échéant, envoie à l'interface 130 une réponse à l'instruction SQL comportant des résultats classés dans un certain ordre.

Si l'interface 130 a déterminé à l'étape 240 que le message reçu comporte, en plus de l'instruction extraite, un argument d'une clause FOR, alors le procédé 200 passe à l'étape 246 suivante. Sinon, il passe à l'étape 248.

Au cours d'une étape 246, l'interface 130 intercepte la réponse à l'instruction SQL, filtre les résultats pour ne garder que le nombre maximal indiqué par l'argument de la clause FOR, et envoie à la routine de communication, à la place de la réponse interceptée, une réponse de remplacement comportant uniquement les résultats filtrés. Les résultats gardés sont les premiers suivant l'ordre de classement. Le procédé 200 passe alors à l'étape 248.

Au cours d'une étape 248, l'interface 130 relaie la réponse (avec tous les résultats ou bien seulement une partie suivant que l'étape 246 a été exécutée ou non) à la routine de communication.

Au cours d'une étape 250, la routine de communication reçoit la réponse et la met à disposition du programme.

Au cours d'une étape 252, le cas échéant, du code machine correspondant à la cinquième partie du code de remplacement est exécuté de sorte que le programme appelle à nouveau la routine de communication pour que cette dernière affecte la réponse aux variables indiquées par la clause INTO. Le procédé 200 retourne alors à l'étape 220.

Il apparaît clairement que le pré-compilateur 120 permet d'utiliser les variables d'indicateur pour n'importe quel type de base de données.

On notera par ailleurs que l'invention n'est pas limitée aux modes de réalisation décrits précédemment. Il apparaîtra en effet à l'homme de l'art que diverses modifications peuvent être apportées aux modes de réalisation décrits ci-dessus, à la lumière de l'enseignement qui vient de lui être divulgué.

Par exemple, la pré-compilation et la compilation pourraient être réalisées sur un autre dispositif informatique que le premier dispositif informatique 106. Le programme exécutable obtenu et la bibliothèque logicielle 118 seraient alors enregistrés dans la mémoire 114 du premier dispositif informatique 106 pour être exécutés.

## Revendications

1. Programme d'ordinateur **caractérisé en ce qu'**il comprend des instructions pour la mise en oeuvre d'un pré-compilateur (120) lorsque elles sont exécutées par un processeur, ledit Pré-compilateur (120) conçu pour :
- analyser (210) un code source, dit code principal, écrit en langage COBOL (116) et comportant :
∘ une définition d'une première variable, dite principale, définie dans le code principal pour contenir une chaîne de caractères, et
o une définition d'une deuxième variable, dite d'indicateur, définie dans le code principal contenant un nombre entier N indiquant le nombre de premiers caractères contenus dans la variable principale qui lui est associée à utiliser par la base de données (102) ;
∘ au moins une instruction SQL embarquée, destinée à une base de données SQL (102) et susceptible de comporter une expression de forme prédéfinie comportant :
▪ la variable principale définie dans le code principal ;
▪ la variable d'indicateur relatif à la variable principale définie dans le code principal ; et
▪ un ou plusieurs caractères prédéfinis d'association de chaque variable principale et à chaque variable d'indicateur qui lui est associé ;
une ou plusieurs expressions de forme prédéfinie dans la ou les instructions SQL embarquées étant recherchées lors de cette analyse ;
**caractérisé en ce qu'**il est en outre conçu pour :
- remplacer (212) chaque expression de forme prédéfinie dans le ou les instructions SQL embarquées trouvées lors de l'analyse (210) précédente par du code de remplacement dans le langage COBOL fournissant les N premiers caractères de la variable principale lorsqu'il est compilé par un compilateur et exécuté par un ordinateur,
- remplacer (214) chaque expression SQL embarqué trouvée par du code de remplacement en COBOL.

2. Pré-compilateur (120) selon la revendication 1, dans lequel chaque expression de forme prédéfinie recherchée est de la forme A:B, où A est la variable principale, B la variable d'indicateur et les deux points le caractère prédéfini d'association de la variable principale A et de la variable d'indicateur B.

3. Pré-compilateur (120) selon la revendication 1 ou 2, dans lequel code de remplacement dans le langage COBOL fournissant les N premiers caractères de la variable principale est de la forme A(1 :B), où A est la variable principale et B est la variable d'indicateur.

4. Pré-compilateur (120) selon l'une quelconque des revendications 1 à 3, en outre conçu pour, avant l'analyse (210) pour la recherche de l'expression de forme prédéfinie dans chaque instruction embarquée :
- analyser (204) le code principal pour rechercher les instructions embarquées dans ledit code ;
- rechercher (206), dans les instructions embarquées, une définition d'une variable de longueur variable, et
pour chaque variable de longueur variable dont une définition a été trouvée :
- remplacer (208), dans le code principal, la définition trouvée par :
∘ la définition d'une variable principale destinée à contenir une chaîne de caractères, et
o la définition d'une variable d'indicateur destinée à contenir un nombre entier indiquant le nombre de premiers caractères contenus dans la variable principale qui sont à utiliser par la base de données (102),
- remplacer (208), dans chaque instruction embarquée, la variable de longueur variable par l'expression de forme prédéfinie correspondante.

5. Pré-compilateur (120) selon la revendication 4, en outre conçu pour détecter la présence d'un mot-clé prédéfini dans une définition d'une variable pour déterminer que cette variable est de longueur variable.

6. Système informatique de développement d'un programme d'ordinateur et d'interfaçage pour son exécution, comportant :
- un pré-compilateur (120) selon l'une des revendications précédentes, dans lequel le code de remplacement comporte un appel à une routine, cet appel passant à la routine l'instruction SQL déduite de l'instruction SQL embarquée, afin de fournir un code source pré-compilé en langage COBOL,
- un compilateur (122) conçu pour compiler (218) le code source pré-compilé pour fournir le programme d'ordinateur,
- une bibliothèque logicielle (118) comportant la routine appelée, cette dernière étant conçue pour envoyer (224) un message contenant l'instruction SQL déduite,
- une interface (130) conçue pour recevoir (226) le message et relayer (242) l'instruction SQL déduite contenue dans le message reçu à la base de données (102) qui appartient à un ensemble d'au moins une base de données (102), ladite base de données regroupant non seulement une structure informatique contenant des données, mais également un système de gestion de base de données permettant de manipuler cette structure informatique.

7. Système selon la revendication 6, dans lequel l'interface (130) est un serveur destiné à être connecté, via un réseau informatique (110), à un dispositif informatique (106) d'exécution du programme d'ordinateur et de chaque appel à la routine qu'il contient, et dans lequel la routine est un client de ce serveur.

8. Système selon la revendication 6 ou 7, dans lequel l'interface (130) est conçue pour :
- tenir une liste de la ou des bases données (102) de l'ensemble à chacune desquelles l'interface (130) a relayé une instruction d'un du ou des messages reçus de la part de la routine, demandant un accès à cette base de données (102),
- analyser (228) chaque message reçu de la routine pour déterminer si l'instruction SQL déduite de ce message est une instruction prédéfinie, et
- si l'instruction de ce message est l'instruction prédéfinie, mettre en oeuvre (230) une procédure de consignation de la ou des bases de données de la liste.

9. Système selon l'une quelconque des revendications 6 à 8, dans lequel l'interface (130) est conçue pour :
- analyser chaque message reçu de la part de la routine et déterminer (240) si ce message comporte, en plus de l'instruction SQL déduite, un nombre représentant un nombre maximal de résultats,
- après avoir relayé l'instruction SQL déduite du message reçu à une base de données (102) de l'ensemble, recevoir de la part de cette base de données (102) une réponse à l'instruction SQL déduite comportant des résultats,
- filtrer (246) les résultats pour ne garder que le nombre maximal de résultats, et
- envoyer (246) à la routine, à la place de la réponse reçue, une réponse de remplacement comportant uniquement les résultats filtrés.

10. Procédé de pré-compilation comportant :
- l'analyse (210) d'un code source (116), dit code principal, écrit en langage COBOL et comportant :
∘ une définition d'une première variable, dite principale, définie dans le code principal pour contenir une chaîne de caractères, et
o une définition d'une deuxième variable, dite d'indicateur, définie dans le code principal contenant un nombre entier N indiquant le nombre de premiers caractères contenus dans la variable principale qui lui est associée à utiliser par la base de données (120);
∘ au moins une instruction SQL embarquée dans le code principal, destinée à une base de données (102), susceptible de comporter une expression de forme prédéfinie comportant :
▪ la variable principale définie dans le code principal ;
▪ la variable d'indicateur relatif à la variable principale définie dans le code principal ; et
▪ un ou plusieurs caractères prédéfinis d'association de chaque variable principale et à chaque variable d'indicateur qui lui est associé ;
**caractérisé en ce qu'**il comporte en outre :
- le remplacement (212) de chaque expression de forme prédéfinie dans les instructions SQL embarquée trouvée lors de l'analyse (210) précédente par du code de remplacement dans le langage COBOL fournissant les N premiers caractères de la variable principale informatique principal conçu, lorsqu'il est compilé par un compilateur et exécuté par un ordinateur ;
- le remplacement (214) de chaque expression SQL embarqué trouvée par du code de remplacement en COBOL.

11. Programme d'ordinateur téléchargeable depuis un réseau de communication et/ou enregistré sur un support lisible par ordinateur et/ou exécutable par un processeur, **caractérisé en ce qu'**il comprend des instructions pour l'exécution des étapes d'un procédé de pré-compilation selon la revendication 10, lorsque ledit programme est exécuté sur un ordinateur.

## Patentansprüche

1. Computerprogramm, **dadurch gekennzeichnet, dass** es Anweisungen für die Implementierung eines Vorkompilierers (120), wenn sie durch einen Prozessor ausgeführt werden, umfasst, wobei der Vorkompilierer (120) konzipiert ist zum:
- Analysieren (210) eines Quellcodes, des sogenannten Hauptcodes, der in der Sprache COBOL (116) geschrieben ist und aufweist:
o eine Definition einer ersten Variablen, der sogenannten Hauptvariablen, die in dem Hauptcode definiert ist, um eine Zeichenkette zu enthalten, und
o eine Definition einer zweiten, sogenannten Indikatorvariablen, die in dem Hauptcode definiert ist und eine ganze Zahl N enthält, die die Anzahl der ersten Zeichen angibt, die in der ihr zugeordneten Hauptvariablen enthalten sind, die durch die Datenbank (102) verwendet werden sollen;
o mindestens eine eingebettete SOL-Anweisung, die für eine SOL-Datenbank (102) bestimmt ist und geeignet ist, einen vordefinierten Formausdruck aufzuweisen, der aufweist:
▪ die in dem Hauptcode definierte Hauptvariable;
▪ die Indikatorvariable, die sich auf die in dem Hauptcode definierte Hauptvariable bezieht; und
▪ ein oder mehrere vordefinierte Zeichen für die Zuordnung jeder Hauptvariablen und zu jeder ihr zugeordneten Indikatorvariablen;
ein oder mehrere vordefinierte Formausdrücke, die in der oder den eingebetteten SOL-Anweisungen definiert sind, die bei dieser Analyse gesucht werden; **dadurch gekennzeichnet, dass** es ferner konzipiert ist zum:
- Ersetzen (212) jedes vordefinierten Formausdrucks in der oder den eingebetteten SOL-Anweisungen, die bei der vorherigen Analyse (210) gefunden wurden, durch Ersatzcode in der Sprache COBOL, der die N ersten Zeichen der Hauptvariablen bereitstellt, wenn er durch einen Kompilierer kompiliert und durch einen Computer ausgeführt wird,
- Ersetzen (214) jedes gefundenen eingebetteten SQL-Ausdrucks durch Ersatzcode in COBOL.

2. Vorkompilierer (120) nach Anspruch 1, wobei jeder gesuchte vordefinierte Formausdruck die Form A:B besitzt, wobei A die Hauptvariable, B die Indikatorvariable und die zwei Punkte das vordefinierte Zeichen für die Zuordnung der Hauptvariable A und der Indikatorvariable B sind.

3. Vorkompilierer (120) nach Anspruch 1 oder 2, wobei der Ersatzcode in der Sprache COBOL, der die N ersten Zeichen der Hauptvariablen bereitstellt, die Form A(1:B) besitzt, wobei A die Hauptvariable und B die Indikatorvariable ist.

4. Vorkompilierer (120) nach einem der Ansprüche 1 bis 3, der ferner konzipiert ist, um vor der Analyse (210) für die Suche des vordefinierten Formausdrucks in jeder eingebetteten Anweisung:
- den Hauptcode zu analysieren (204), um nach den in dem Code eingebetteten Anweisungen zu suchen;
- Suchen (206), in den eingebetteten Anweisungen, einer Definition einer Variablen variabler Länge; und
für jede Variable variabler Länge, für die eine Definition gefunden wurde:
- Ersetzen (208), in dem Hauptcode, der gefundenen Definition durch:
o die Definition einer Hauptvariablen, die dafür bestimmt ist, eine Zeichenkette zu enthalten, und
o die Definition einer Indikatorvariablen, die dafür bestimmt ist, eine ganze Zahl zu enthalten, die die Anzahl der ersten in der Hauptvariablen enthaltenen Zeichen, die durch die Datenbank (102) verwendet werden sollen, angibt,
- Ersetzen (208), in jeder eingebetteten Anweisung, der Variablen variabler Länge durch den entsprechenden vordefinierten Formausdruck.

5. Vorkompilierer (120) nach Anspruch 4, der ferner konzipiert ist, um das Vorhandensein eines vordefinierten Schlüsselworts in einer Definition einer Variablen zu erkennen, um zu bestimmen, dass diese Variable eine variable Länge besitzt.

6. Informatiksystem für eine Entwicklung eines Computerprogramms und eine Schnittstellenbildung für dessen Ausführung, das aufweist:
- einen Vorkompilierer (120) nach einem der vorstehenden Ansprüche, wobei der Ersatzcode einen Aufruf an eine Routine aufweist, wobei dieser Aufruf die SOL-Anweisung, die aus der eingebetteten SQL-Anweisung abgeleitet worden ist, an die Routine übergibt, um einen vorkompilierten Quellcode in der Sprache COBOL bereitzustellen,
- einen Kompilierer (122), der konzipiert ist, um den vorkompilierten Quellcode zu kompilieren (218), um das Computerprogramm bereitzustellen,
- eine Softwarebibliothek (118), die die aufgerufene Routine aufweist, wobei letztere konzipiert ist, um eine Nachricht, die die abgeleitete SOL-Anweisung enthält, zu senden (224), - eine Schnittstelle (130), die konzipiert ist, um die Nachricht zu empfangen (226) und die abgeleitete SOL-Anweisung, die in der empfangenen Nachricht enthalten ist, an die Datenbank (102) weiterzuleiten (242), die zu einer Anordnung von mindestens einer Datenbank (102) gehört, wobei die Datenbank nicht nur eine Informatikstruktur, die Daten enthält, sondern auch ein Datenbankverwaltungssystem, das es ermöglicht, diese Informatikstruktur zu manipulieren, umfasst.

7. System nach Anspruch 6, wobei die Schnittstelle (130) ein Server ist, der dafür bestimmt ist, über ein Rechnernetz (110) mit einer Rechenvorrichtung (106) für die Ausführung des Computerprogramms und jedes Aufrufs der darin enthaltenen Routine verbunden zu werden, und wobei die Routine ein Client dieses Servers ist.

8. System nach Anspruch 6 oder 7, wobei die Schnittstelle (130) konzipiert ist zum:
- Führen einer Liste der Datenbank oder der Datenbanken (102) der Anordnung, an die die Schnittstelle (130) jeweils eine Anweisung einer der einen Nachricht oder der Nachrichten, die von dem Teil der Routine empfangen worden sind, weitergeleitet hat, die einen Zugriff auf diese Datenbank (102) anfordert,
- Analysieren (228) jeder von der Routine empfangenen Nachricht, um zu bestimmen, ob die aus dieser Nachricht abgeleitete SOL-Anweisung eine vordefinierte Anweisung ist, und
- falls die Anweisung dieser Nachricht die vordefinierte Anweisung ist, Durchführen (230) eines Verfahrens zum Protokollieren der Datenbank oder der Datenbanken in der Liste.

9. System nach einem der Ansprüche 6 bis 8, wobei die Schnittstelle (130) konzipiert ist zum:
- Analysieren jeder von der Routine empfangenen Nachricht und Bestimmen (240), ob diese Nachricht zusätzlich zu der abgeleiteten SQL-Anweisung eine Anzahl enthält, die eine maximale Anzahl von Ergebnissen darstellt,
- nachdem die aus der empfangenen Nachricht abgeleitete SOL-Anweisung an eine Datenbank (102) der Anordnung weitergegeben worden ist, Empfangen von dem Teil dieser Datenbank (102) einer Antwort auf die abgeleitete SOL-Anweisung, die Ergebnisse aufweist,
- Filtern (246) der Ergebnisse, um nur die maximale Anzahl der Ergebnisse zu behalten, und
- Senden (246) einer Ersatzantwort, die nur die gefilterten Ergebnisse enthält, anstelle der empfangenen Antwort an die Routine.

10. Verfahren zum Vorkompilieren, das aufweist:
- Analysieren (210) eines Quellcodes (116), des sogenannten Hauptcodes, der in der Sprache COBOL geschrieben ist und aufweist:
o eine Definition einer ersten Variablen, der sogenannten Hauptvariablen, die in dem Hauptcode definiert ist, um eine Zeichenkette zu enthalten, und
o eine Definition einer zweiten, sogenannten Indikatorvariablen, die in dem Hauptcode definiert ist und eine ganze Zahl N enthält, die die Anzahl der ersten Zeichen angibt, die in der ihr zugeordneten Hauptvariablen enthalten sind, die durch die Datenbank (120) verwendet werden sollen;
o mindestens eine in den Hauptcode eingebettete SOL-Anweisung, die für eine Datenbank (102) bestimmt ist und geeignet ist, einen vordefinierten Formausdruck aufzuweisen, der aufweist:
▪ die in dem Hauptcode definierte Hauptvariable;
▪ die Indikatorvariable, die sich auf die in dem Hauptcode definierte Hauptvariable bezieht; und
▪ ein oder mehrere vordefinierte Zeichen für die Zuordnung jeder Hauptvariablen und zu jeder ihr zugeordneten Indikatorvariablen;
**dadurch gekennzeichnet, dass** es ferner aufweist:
- Ersetzen (212) jedes vordefinierten Formausdrucks in den eingebetteten SOL-Anweisungen, der bei der vorherigen Analyse (210) gefunden wurde, durch Ersatzcode in der Sprache COBOL, der die N ersten Zeichen der Hauptrechenvariablen bereitstellt, wenn er durch einen Kompilierer kompiliert und durch einen Computer ausgeführt wird;
- Ersetzen (214) jedes gefundenen eingebetteten SQL-Ausdrucks durch Ersatzcode in COBOL.

11. Computerprogramm, das von einem Kommunikationsnetz heruntergeladen und/oder auf einem computerlesbaren Träger gespeichert und/oder durch einen Prozessor ausgeführt werden kann, **dadurch gekennzeichnet, dass** es Anweisungen für die Ausführung der Schritte eines Vorkompilierungsverfahrens nach Anspruch 10 umfasst, wenn das Programm auf einem Computer ausgeführt wird.

## Claims

1. Computer program **characterized in that it** comprises instructions for implementing a pre-compiler (120) when they are executed by a processor, said pre-compiler (120) being designed for:
- analyzing (210) a source code, called main code, written in COBOL language (116) and comprising:
o defining a first variable, referred to as main variable, defined in the main code to contain a string of characters, and
o defining a second variable, called an indicator variable, defined in the main code containing an integer number N indicating the number of first characters contained in the main variable associated with it to be used by the database (102);
o at least one embedded SQL instruction, intended for an SQL database (102) and capable of comprising an expression of predefined shape comprising:
▪ the main variable defined in the main code;
▪ the indicator variable relating to the main variable defined in the main code; and
▪ one or more predefined characters for associating each main variable and each indicator variable associated therewith;
one or more predefined shape expressions in the embedded SQL instruction (s) being searched during this analysis;
**characterized in that it** is further being designed for:
- replacing (212) each predefined shape expression in the embedded SQL instruction (s) found during the previous analysis (210) by replacement code in the COBOL language providing the N first characters of the main variable when compiled by a compiler and executed by a computer,
- replacing (214) each embedded SQL expression found by COBOL replacement code.

2. The precompiler (120) according to claim 1, wherein each expression of predefined shape searched for is in the form A:B, where A is the main variable, B the indicator variable and both points the predefined association character of the main variable A and the indicator variable B.

3. The pre-compiler (120) according to claim 1 or 2, wherein replacement code in the COBOL language providing the N first characters of the main variable is in the form A(1:B), where A is the main variable and B is the indicator variable.

4. The pre-compiler (120) according to any one of claims 1 to 3, further designed, prior to the analysis (210), for searching for the expression of predefined shape in each embedded instruction;
- analyzing (204) the main code in order to search for the embedded instructions in said code;
- searching (206), in the embedded instructions, for a definition of a variable of variable length, and
for each variable of variable length for which a definition has been found:
- replacing (208), in the main code, the definition found by:
o the definition of a main variable intended to contain a string of characters, and
o the definition of an indicator variable intended to contain an integer number indicating the number of first characters contained in the main variable that are to be used by the database (102),
- replacing (208), in each embedded instruction, the variable length variable by the expression of corresponding predefined shape.

5. The pre-compiler (120) according to claim 4, further designed for detecting the presence of a predefined keyword in a definition of a variable in order to determine that this variable is of variable length.

6. A computer system for developing a computer program and interfacing for the execution thereof, comprising:
- a pre-compiler (120) according to one of the preceding claims, wherein the replacement code comprises a call to a routine, said call passing to the routine the SQL instruction deduced from the embedded SQL instruction, in order to provide a pre-compiled source code in COBOL language,
- a compiler (122) designed for compiling (218) the pre-compiled source code in order to provide the computer program,
- a software library (118) including the called routine, the latter being designed for sending (224) a message containing the derived SQL instruction,
- an interface (130) designed for receiving (226) the message and for relaying (242) the deduced SQL instruction contained in the message received to the database (102) that belongs to a set of at least one database (102), said database grouping not only a computing structure containing data, but also a database management system for manipulating this computing structure.

7. The system according to claim 6, wherein the interface (130) is a server intended to be connected, via a computer network (110), to a computing device (106) for executing the computer program and each call to the routine that it contains, and wherein the routine is a client of this server.

8. The system according to claim 6 or 7, wherein the interface (130) is being designed for:
- maintaining a list of the one or more databases (102) of the set to each of which the interface (130) has relayed an instruction from one of the message(s) received from the routine, requesting access to this database (102),
- analyzing (228) each message received from the routine in order to determine whether the SQL instruction derived from that message is a predefined instruction, and
- if the instruction of this message is the predefined instruction, performing (230) a logging procedure of the one or more databases of the list.

9. The system according to any one of claims 6 to 8, wherein the interface (130) is being designed for:
- analyzing each message received from the routine and determining (240) whether this message comprises, in addition to the derived SQL instruction, a number representing a maximum number of results,
- after having relayed the SQL instruction deduced from the message received to a database (102) of the set, receiving from said database (102) a response to the deduced SQL instruction comprising results,
- filtering (246) the results in order to keep only the maximum number of results, and
- sending (246) to the routine, in place of the received response, a replacement response comprising only the filtered results.

10. A pre-compilation method comprising:
- analyzing (210) a source code (116), called main code, written in COBOL language and comprising:
o defining a first variable, referred to as main variable, defined in the main code to contain a string of characters, and
o defining a second variable, called an indicator variable, defined in the main code containing an integer number N indicating the number of first characters contained in the main variable associated with it to be used by the database (120);
o at least one SQL instruction embedded in the main code, intended for a database (102), capable of comprising an expression of predefined shape comprising:
▪ the main variable defined in the main code;
▪ the indicator variable relating to the main variable defined in the main code; and
▪ one or more predefined characters for associating each main variable and each indicator variable associated therewith;
**characterized in that it** further comprises:
- replacing (212) each predefined shape expression in the embedded SQL instructions found during the preceding analysis (210) by replacement code in the COBOL language providing the N first characters of the main computing variable designed, when compiled by a compiler and executed by a computer;
- replacing (214) each embedded SQL expression found by COBOL replacement code.

11. A computer program downloadable from a communication network and/or recorded on a computer-readable medium and/or executable by a processor, **characterized in that it** comprises instructions for the execution of the steps of a pre-compilation method according to claim 10, when said program is executed on a computer.
